# EUROPEAN PATENT APPLICATION

(11) **EP 4 636 735 A1**
(43) Date of publication of application: **22.10.2025**
(21) Application number: 25169303.2
(22) Date of filing: 08.04.2025
(51) Int. Cl.: G08G 5/22, G08G 5/23, G08G 5/26, G08G 5/53, G08G 5/56, G08G 5/76

(54) **AIRCRAFT TURBULENCE NOTIFICATION SYSTEM AND METHOD**

(30) Priority: 16.04.2024 US 202418637194
(71) Applicant: The Boeing Company, Arlington, VA 22202 (US)
(72) Inventor: CRAWFORD, Cole Newton, 22202 ARLINGTON, (FR); NAGLE, Richard, ARLINGTON,, 22202 (US); OLNEY, Lance, ARLINGTON,, 22202 (US); STEILBERG, Robert Hays, II, ARLINGTON, 22202 (US)
(74) Representative: Plasseraud IP

(57) **Abstract**

A turbulence notification system and method are described that include obtaining airflow reports generated by multiple reporting aircraft while in flight. The system and method generate normalized turbulence values based on reported turbulence levels in the airflow reports and at least one of sizes of the reporting aircraft or weights of the reporting aircraft. The system and method determine effective turbulence levels specific to a first aircraft based on the normalized turbulence values and an identifying characteristic of the first aircraft, where the effective turbulence levels predict an effect of atmospheric airflow on the first aircraft. The system and method generate a map that plots a scheduled route of the first aircraft and graphic indicia representing the effective turbulence levels that are determined. The graphic indicia are plotted at locations along vertical and horizontal axes of the map corresponding to the geographic locations of the airflow reports.

## Description

### FIELD OF THE DISCLOSURE

The present disclosure generally relates to aircraft and airflow conditions encountered by aircraft in the atmosphere, including turbulence.

### BACKGROUND OF THE DISCLOSURE

Turbulence significantly affects the comfort of passengers on commercial aircraft and has even caused some would be passengers to forego flying due to their fears associated with the turbulence. Turbulence is an irregular motion of the air resulting from eddies and vertical currents. The irregular airflow may be caused by masses of air having slightly different temperatures, pressures, and densities moving at various speeds and directions in the atmosphere. The variances in air masses can be attributable to atmospheric pressure, jet streams, air around mountains, cold or warm weather fronts, thunderstorms, and/or the like.

It would be preferable for an aircraft to avoid turbulence altogether, but it is very difficult to predict clear air turbulence (e.g., turbulence in clear air conditions as opposed to turbulence associated with thunderstorms) along an upcoming segment of a flight using available technology. For example, radar technology may not be able to detect the slight differences in the airflow movements that cause clear air turbulence. Because turbulence can occur with little or no warning, airlines typically suggest that all passengers of commercial aircraft stay seated with their seat belts fastened during the entire flight, except for temporary breaks for comfort.

In an effort to identify locations of clear air turbulence, the aviation industry has created a system in which the pilots of aircraft communicate with each other to share the locations at which the aircraft have encountered turbulence. By sharing the locations of detected turbulence, other aircraft may be able to take precautionary measures to either avoid those locations and/or brace for the turbulence. The existing system involves the pilots radioing pilot reports (e.g., PIREPs) of the encountered clear air turbulence on their routes. A drawback of the PIREPS is that the PIREPs are subjective, unreliable, and qualitative. Furthermore, the PIREPs are limited in value because the PIREPs only describe locations in which turbulence is encountered. Known PIREPs are not generated by pilots to report areas of smooth (e.g., chop) airflow. Finally, the known PIREPs do not report the altitude at which the turbulence is encountered.

Furthermore, the severity at which turbulent airflow is experienced by a specific aircraft is dependent on physical characteristics of the aircraft and motive characteristics of the aircraft in flight. The physical characteristics include the weight, size, and wing area of the aircraft. In general, larger and heavier aircraft may be less affected by turbulent airflow in the environment than smaller and lighter aircraft. The motive characteristics include the speed of the aircraft in flight. In general, aircraft traveling at greater speeds may be less affected by turbulent airflow in the environment than slower aircraft. For example, a first aircraft may experience turbulent airflow that it classifies as moderate. If a second aircraft that is larger and/or traveling faster than the first aircraft traverses through the same turbulent airflow, the second aircraft is less affected and may classify the turbulence as light. Thus, known reporting of turbulence is dependent on the physical characteristics of the reporting aircraft and the motive characteristics of the reporting aircraft. The reported turbulence information may be inaccurate and/or misleading for other aircraft to rely on, particularly if there are substantial physical differences and/or speed differences between the aircraft reporting the turbulence information and the aircraft receiving and analyzing the turbulence information.

### SUMMARY OF THE DISCLOSURE

A need exists for a system and a method for automatically notifying operators of reported airflow conditions, such as turbulence, experienced by aircraft in flight. A need exists for the reported airflow conditions to include both locations of turbulent air and smooth air, and to indicate the altitude of the reported airflow conditions to provide enhanced situational awareness for the operators. A need exists for reported turbulence levels in the reports to be aircraft-independent (e.g., aircraft-agnostic), which allows for reliably predicting the effects of turbulence on a specific aircraft during a flight.

With those needs in mind, according to a first aspect, a method of estimating expected turbulence encountered by a first aircraft during a flight as defined in claims 1 to 8 is provided.

According to a second aspect, a turbulence notification system as defined in claims 13 to 15 is provided.

### BRIEF DESCRIPTION OF THE DRAWINGS

Figure 1 is a block diagram illustrating a turbulence notification system formed in accordance with embodiments herein.
Figure 2 illustrates a controller of the turbulence notification system receiving airflow reports and generating a profile map based on the airflow reports according to an embodiment.
Figure 3 is a top-down geographic map plotting a scheduled route of a first aircraft and graphic indicia that represent the airflow conditions in the received airflow reports.
Figure 4 is a profile map plotting a first flight path and a second flight path of the first aircraft along the scheduled route that is shown in Figure 3 according to an embodiment.
Figure 5 illustrates a portion of a graphical user interface that includes a text box according to an embodiment of the turbulence notification system.
Figure 6 is a flow chart of a method for predicting and managing turbulence for a scheduled flight according to an example of the present disclosure.
Figure 7 illustrates a normalization algorithm of the turbulence notification system receiving the airflow reports and generating normalized turbulence values based on the airflow reports according to an embodiment.
Figure 8 illustrates the controller of the turbulence notification system receiving the normalized turbulence values and determining effective turbulence levels based on the normalized turbulence values according to an embodiment.
Figure 9 illustrates the controller of the turbulence notification system receiving the effective turbulence levels and generating one or more maps based on the effective turbulence levels and trip information according to an embodiment.
Figure 10 is a flow chart of a method for estimating turbulence expected to be encountered by a first aircraft during a flight based on airflow reports from other aircraft according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Embodiments of the present disclosure describe a system and method to communicate and present information about airflow conditions experienced by aircraft in flight. The system and method may use the information about airflow conditions, also referred to herein as turbulence information, to assist with flight management of a first aircraft. For example, the system and method may generate a profile map that depicts a flight path for the first aircraft on a scheduled route plotted in terms of altitude over time, distance, or location. The profile map is generated to include at least some airflow conditions experienced by other aircraft by depicting graphic indicia representing the airflow conditions on the profile map at positions indicative of the geographic locations and altitudes of the aircraft at the times that the airflow conditions are monitored. The profile map can be displayed on a display device to assist operators associated with the first aircraft, such as flight planners and pilots, select altitudes and/or flight paths for the first aircraft based at least in part on turbulence. For example, an operator may view the profile map and select a flight path for the first aircraft that is expected to be smoother (e.g., less turbulent) than other altitudes and/or flight paths.

Presenting the airflow conditions, including both smooth air and turbulent air, on a profile map that shows different altitudes, enhances the awareness of the operator and assists the operator with limiting the turbulence experienced by the first aircraft on the scheduled route. For example, when determining a flight path for the first aircraft to follow along the scheduled route, the operator may intentionally target altitudes and geographic locations identified as having smooth or relatively smooth airflow, and may intentionally avoid or limit exposure to altitudes and geographic locations identified as having moderate, severe, and extreme turbulence. As a result, the passengers on the first aircraft may be more comfortable and relaxed on the flight than if the first aircraft cruises at a different altitude and/or follows a different flight path.

Optionally, in addition to presenting the airflow conditions (e.g., turbulence information) to an operator for visual observation, the system and method described herein may automatically determine or select a flight path for the first aircraft to follow on the scheduled route based on the airflow conditions. For example, the system and method may compare the airflow conditions proximate to multiple candidate flight paths and may identify at least one flight path as a recommended flight path based on that recommended flight path having less turbulence (e.g., smoother airflow) than at least some of the other candidate flight paths. The system and method may present the recommended flight path to the operator associated with the first aircraft via a text box on the display device, a text message, or the like.

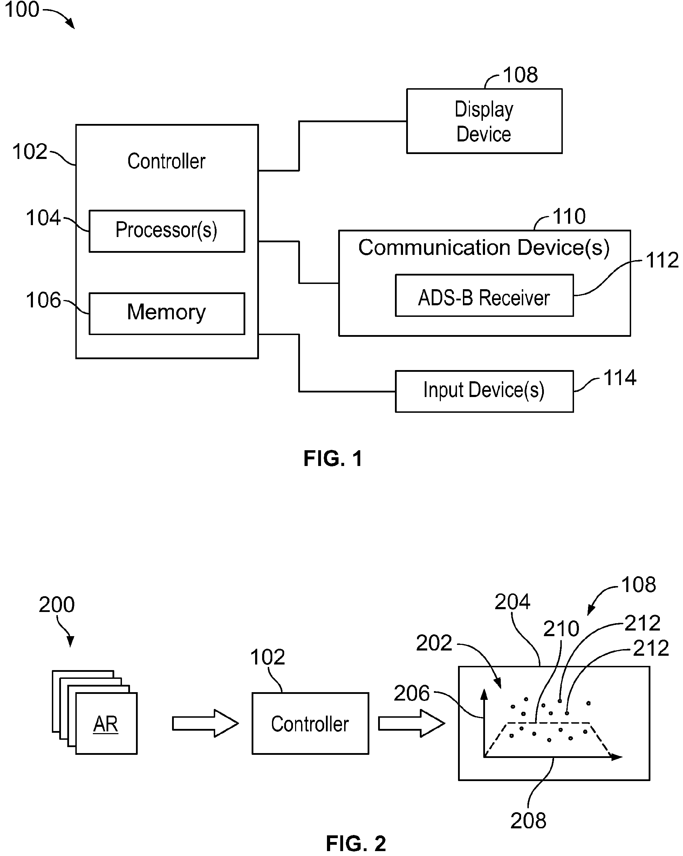

Figure 1 is a block diagram illustrating a turbulence notification system 100 formed in accordance with embodiments herein. The turbulence notification system 100 includes a controller 102 that represents hardware circuitry that includes and/or is connected with one or more processors 104 (e.g., one or more microprocessors, integrated circuits, microcontrollers, field programmable gate arrays, etc.). The controller 102 includes and/or is connected with at least one tangible and non-transitory computer-readable storage medium (e.g., memory device) 106. For example, the one or more processors 104 are communicatively connected to the at least one memory device 106. The one or more processors 104 of the controller 102 may execute programmed instructions (e.g., software) stored in the at least one memory device 106 to perform the operations of the controller 102 described herein. The programmed instructions may instruct the one or more processors 104 how to control the other components of the turbulence notification system 100. The programmed instructions may provide one or more algorithms that are performed by the one or more processors 104 as described herein. The memory device 106 may store additional information, such as a first database that contains received airflow reports, a second database that contains maps generated by the controller 102, and/or the like.

The turbulence notification system 100 may include additional (e.g., auxiliary) components that are operably connected to the controller 102. For example, the auxiliary components may include a display device 108, one or more communication devices 110, and one or more input devices 114. The auxiliary components may be operably (e.g., communicatively) connected to the controller 102 via respective wired or wireless communication pathways. The controller 102 may generate control signals that are communicated along the communication pathways to the auxiliary components to control operation of the auxiliary components. The controller 102 may receive information (e.g., data) from the auxiliary components via the communication pathways. The turbulence notification system 100 shown in Figure 1 is merely exemplary, and nonlimiting. For example, the turbulence notification system 100 may include at least one additional component that is not shown in Figure 1 and/or may lack one or more of the auxiliary components shown in Figure 1, such as the input device(s) 114.

The display device 108 may be an electronic monitor, television, touch screen, and/or the like. The controller 102 may control the display device 108 to display information to an operator viewing a display screen of the display device 108. For example, the controller 102 may display one or more maps to the operator. The maps may enhance situational awareness of the operator, and assist the operator with selecting a flight path for a first aircraft to pursue along a scheduled route. In an example, the display device 108 may be located onboard the first aircraft. In another example, the display device 108 may be located off-board the first aircraft, such as at a dispatch facility, an air traffic control facility, or the like. In an example, the controller 102 may control the display device 108 to display a profile map that depicts at least one flight path of the first aircraft and graphic indicia representative of airflow conditions (e.g., turbulence statuses) reported in the airflow reports. The profile map plots the data along a vertical axis that represents altitude and a horizontal axis that represents time, location, or distance.

The one or more communication devices 110 represent hardware circuitry that can communicate electrical signals via wireless communication pathways and/or wired conductive pathways. The communication device(s) 110 may include transceiving circuitry (e.g., a transceiver or separate transmitter and receiver), one or more antennas, and the like, for wireless communication. In an example, the communication device(s) 110 include an automatic dependent surveillance broadcast (ADS-B) receiver 112. The ADS-B receiver 112 may be used to communicate with other aircraft, satellites, and/or ground stations. The ADS-B receiver 112 may be located onboard the first aircraft. The ADS-B receiver 112 may include surveillance technology that combines the first aircraft's positioning source, avionics, and a ground infrastructure to create an accurate surveillance interface between first aircraft and air traffic control. The ADS-B receiver 112 may broadcast information about the first aircraft's GPS location, altitude, ground speed, and/or other data to ground stations and other aircraft. The outgoing information may also include airflow reports, as described herein. The ADS-B receiver 112 can also receive information from external sources, such as weather and traffic position information. In an example, the ADS-B receiver 112 may receive airflow reports generated by other aircraft. The ADS-B receiver 112 may broadcast the outgoing information periodically, such as once per second. The ADS-B receiver 112 may periodically receive the incoming information. For example, the ADS-B receiver 112 may continuously listen for incoming messages.

The one or more input devices 114 may permit a human operator to interact with the turbulence notification system 100. A human operator may use an input device 114 to submit a user input command that provides an instruction to the controller 102 about a desired task. For example, one instruction may be to select a candidate flight path of multiple different flight paths for the first aircraft to implement on a scheduled flight. Another instruction may be to modify the information on a graphical user interface displayed by the display device 108. For example, the human operator can manipulate an input device 114 to switch between different maps, select a drop-down menu, and/or the like. The operator manipulates the input device 114 (e.g., by typing a message, pressing designated buttons, providing a voice command, and/or the like) to generate the user input command that is then conveyed by the input device 114 to the controller 102. The one or more input devices 114 may include physical buttons, a keyboard, virtual buttons on a touchscreen, a graphical user interface (GUI), a mouse, a microphone, or the like. In an example, the display device 108 and the input device 114 may be integrated as a touchscreen interface.

The components of the turbulence notification system 100 may be integrated into a computer device and therefore at a common location. The computer device may be a laptop computer, a tablet computer, a smartphone, a workstation, or the like. In an example, the components of the turbulence notification system 100 are installed onboard the first aircraft. In another example, at least some of the components of the turbulence notification system 100 may be located remote from each other and communicatively connected to each other (e.g., via a network connection). For example, one or more components of the controller 102 may be located in a server or other remote device that is discrete from the computer device that contains the other components of the turbulence notification system 100.

In an embodiment, the controller 102 receives airflow reports generated by multiple aircraft while the aircraft are in flight. Each of the airflow reports includes a geographic location of a respective aircraft of the multiple aircraft that generated the airflow report, an altitude of the respective aircraft, and an airflow condition experienced by the respective aircraft and caused by atmospheric airflow. The airflow reports may include additional information, such as the speed of the respective aircraft, an identifier of the respective aircraft, and/or a size and/or weight of the respective aircraft. The speed of the aircraft refers to the current speed of the aircraft through the air in flight at the time that the information used to generate the airflow report is collected. The speed may be the airspeed of the air moving over the wings in flight, or said differently, the relative speed between the aircraft and the airmass. The airflow reports may be automatically generated and communicated by the aircraft on a periodic basis. The controller 102 analyzes the information in the airflow reports and generates a profile map based on the information from the airflow reports. For example, the profile map plots at least a first flight path of a first aircraft on a scheduled route of the first aircraft and graphic indicia representing the airflow conditions included in at least some of the airflow reports. The profile map may have a vertical axis representing altitude and a horizontal axis representing one of time, location, or distance corresponding to travel of the first aircraft along the scheduled route. The controller 102 may display the profile map that is generated on the display device 108 for observation by an operator associated with the first aircraft. The operator may be a pilot of the first aircraft, a navigator or co-pilot of the first aircraft, a flight planner, a dispatcher, an air traffic controller, and/or the like.

Figure 2 illustrates the controller 102 of the turbulence notification system 100 receiving airflow reports 200 and generating a profile map 202 based on the airflow reports 200 according to an embodiment. The controller 102 may control the display device 108 to display the profile map 202 on a display screen 204 of the display device 108.

The airflow reports 200 may be generated by other aircraft while the aircraft are in flight. Each of the airflow reports 200 provides status information about the quality of airflow experienced by the aircraft, such as an indication of how smooth or turbulent the air is in the atmosphere through which the aircraft is flying. The airflow reports 200 may be wirelessly received by the communication device 110 of the turbulence notification system 100, and conveyed to the controller 102 for analysis. The communication device 110 that receives the airflow reports 200 may be the ADS-B receiver 112. The airflow reports 200 may be automatically generated and communicated by the aircraft on a periodic basis. As such, the communication device 110 may automatically receive the airflow reports 200 on the periodic basis as additional airflow reports 200 are generated by the aircraft.

In an example, each of the airflow reports 200 may include a geographic location of the respective aircraft that generates the airflow report 200, an altitude of the respective aircraft, and an airflow condition experienced by the respective aircraft. The geographic location may include coordinates in a coordinate plane. In an example, the geographic location includes longitude and latitude coordinates. The geographic location may be determined by a global positioning system (GPS) receiver or the like onboard the respective aircraft. The altitude of the respective aircraft refers to the current distance (e.g., height) of the aircraft relative to sea level or ground level. The altitude may be measured by a sensor onboard the aircraft, such as an altimeter. The airflow condition is caused by atmospheric airflow encountered by the aircraft. The airflow condition refers to an extent of turbulence, although the airflow condition may indicate that the surrounding airflow is smooth or laminar (e.g., generally free of turbulence). For example, the airflow reports 200 may automatically report the quality of airflow encountered on a periodic basis, whether the quality is smooth or turbulent. As a result, areas of smooth air are reported as well as areas of turbulence. The areas of smooth air can be targeted by an operator associated with the first aircraft when selecting a flight path for the first aircraft to follow. Conventional PIREPs fail to identify smooth air and instead only report turbulence. Furthermore, reported turbulence in conventional PIREPs is subjectively classified by a pilot, which has limited reliability.

The airflow condition in the airflow reports 200 may describe a level of a force event experienced by the respective aircraft that generated the airflow report 200. The force event may refer to the force of airflow in the atmosphere exerted on the aircraft, such as on the wings of the aircraft. The level of the force event provided in the airflow report 200 may be one of a plurality of different turbulence levels of increasing severity. The different turbulence levels include at least a first level indicating smooth airflow (e.g., lack of turbulence) and a second level indicating turbulent airflow. There may be more than two different turbulence levels. For example, the turbulence levels may include, in order of increasing severity, "smooth" (or "chop"), "light," "moderate," "severe," and "extreme." The aircraft generating the airflow reports 200 may select the level of the force event based on a measured amount of force, acceleration, or the like associated with the force event. The airflow reports 200 and force events may be similar to the reports and force events described in U.S. Patent Application No. 17/654,844, filed March 15, 2022 and titled "Monitoring Aircraft Turbulence Using Data From An Automatic Dependent Surveillance Broadcast (ADS-B) Receiver" (U.S. Publication 2023/0298476), which is incorporated by reference herein.

As described in greater detail in this document, a system for management of a flight of an aircraft may have an ADS-B receiver 112 and an electronic flight bag (EFB). The ADS-B receiver 112 may include an attitude and heading reference system (AHRS) including sensors. The sensors may include a gyroscope configured to measure a rotation of the aircraft, and an accelerometer configured to measure an acceleration of the aircraft. The ADS-B 112 may be configured to generate a data stream during the flight, the data stream including an ADS-B message, a geographical position of the aircraft received from a satellite navigation system, attitude and heading reference system (AHRS) data including the rotation measured by the gyroscope and the acceleration of the aircraft measured by the accelerometer. The electronic flight bag may be configured to receive the data stream from the ADS-B receiver and to access data that indicates a weight of the aircraft, and identify a force event experienced by the aircraft based on the geographic position, the AHRS data and the weight of the aircraft, and output a report that indicates the force event experienced by the aircraft based on the geographical position, the AHRS data, and the weight of the aircraft. Identifying the force event includes the determination of a force vector applied to the aircraft based on the geographic position, the rotation, the acceleration, and the weight, and identifying the force event from the force vector.

The airflow reports 200 may include the time at which the airflow report 200 is generated. The information in the airflow reports 200 loses relevance over time. The controller 102 may use the time of the airflow reports 200 by giving more weight to the information of newer (e.g., more up-to-date) airflow reports 200 than older airflow reports 200.

Optionally, the airflow reports 200 may identify a flight stage or mode of the aircraft which generates the airflow report 200. For example, the flight stage may be "takeoff," "maneuvering," "landing," "cruise," or the like. In an example, the controller 102 may only analyze the force events encountered by aircraft that are in the cruise mode. For example, the controller 102 may filter out and ignore airflow reports 200 generated while the respective aircraft is taking off, landing, and maneuvering (e.g., turning). The force events during takeoff, maneuvering, and landing may be caused by aircraft acceleration rather than atmospheric airflow, so those force events are not reliable indications of smooth or turbulent airflow.

The controller 102 generates the profile map 202 based on the information in the received airflow reports 200. The profile map 202 has a vertical axis 206 that represents altitude and a horizontal axis 208 that represents time, distance, or location. The profile map 202 plots at least a first flight path 210 of the first aircraft on a scheduled route of the first aircraft. The first flight path 210 shows the altitude of the first aircraft over time, distance, or location along the scheduled route from a starting location (e.g., departure site) to an arrival location (e.g., destination site). The time indicates time during the flight. The distance indicates distance traveled by the first aircraft during the flight. The location indicates geographic locations through which the first aircraft travels during the flight. The first portion of the first flight path 210 has a positive slope, indicating that the first aircraft is climbing and gaining altitude during takeoff. The second portion of the first flight path 210 is generally flat, indicating that the first aircraft is at the cruising altitude. The third portion of the first flight path 210 has a negative slope, indicating the first aircraft is descending for landing at the destination. The profile map 202 is a side profile map that displays the planned flight of the first aircraft from a side profile view.

The controller 102 generates the profile map 202 to also plot graphic indicia 212 representing the airflow conditions of at least some of the airflow reports 200. The graphic indicia 212 are shown as small circles/dots in Figure 2, but may have different shapes in other example implementations of the profile map 202. Each graphic indicium 212 on the profile map 202 indicates the airflow condition of a different one of the airflow reports 200. The controller 102 determines the positions of the graphic indicia 212 on the profile map 202 based on the geographic locations and the altitudes reported in the airflow reports. For a first graphic indicium 212 corresponding to a first airflow report 200, the controller 102 determines the location of the first graphic indicium 212 along the vertical axis 206 based on the altitude included in the first airflow report 200. For example, if the altitude of the aircraft the generated the first airflow report 200 is 35,000 feet (ft.), then the first graphic indicium 212 is plotted at a position along the vertical axis 206 that represents 35,000 ft. The controller 102 determines the location of the first graphic indicium 212 along the horizontal axis 208 based on the geographic location included in the first airflow report 200. For example, the controller 102 may determine (e.g., calculate) a time, location, or distance of intersection. The time, location, or distance of intersection refers to the time, location or distance along the scheduled flight of the first aircraft in which the first aircraft will travel through or proximate to the longitude and latitude coordinates of the aircraft that generated the first airflow report 200 (at the time that the first airflow report 200 is generated). The controller 102 then plots the first graphic indicium 212 at a position along the horizontal axis 208 that represents the calculated time, location, or distance of intersection. Thus, the controller 102 may plot the graphic indicia 212 so that each x coordinate in the two-dimensional profile map 202 is based on the geographic location of the corresponding airflow report 200 and each y coordinate is based on the altitude of the corresponding airflow report 200.

Although not shown in Figure 2, the controller 102 may generate the profile map 202 so that at least some of the graphic indicia 212 have different visual characteristics. The controller 102 may differentiate the visual characteristics of the graphic indicia 212 based on the airflow conditions of the airflow reports 200. For example, the controller 102 may visually distinguish some of the graphic indicia 212 based on the airflow reports 200 having different turbulence levels of the airflow condition. The controller 102 may generate the profile map 202 so that the graphic indicia 212 representing airflow reports 200 that indicate smooth, chop, and/or light turbulence levels appear different than the graphic indicia 212 representing airflow reports 200 that indicate moderate, severe, and/or extreme turbulence levels. In an example, the controller 102 may use a different color for the graphic indicia 212 representing different turbulence levels. For example, graphic indicia 212 representing smooth (or chop) may be displayed on the profile map 202 in green, graphic indicia 212 representing light turbulence may be displayed in light yellow, graphic indicia 212 representing moderate turbulence may be displayed in dark yellow, graphic indicia 212 representing severe turbulence may be displayed in orange, and graphic indicia 212 representing extreme turbulence may be displayed in red. The profile map 202 may include a key that explains the meaning of the different colors of the graphic indicia 212. In another example, the graphic indicia 212 representing different airflow conditions (e.g., turbulence levels) may be identified by having different shapes, different fill textures (e.g., cross-hatching, dots, etc.), different sizes, or the like.

After generating the profile map 202, the controller 102 controls the display device 108 to display the profile map 202 on the display screen 204. The display device 108 may render the profile map 202 and scale the profile map 202 to an appropriate size for display on the display screen 204. The profile map 202 is displayed for observation by an operator associated with the first aircraft. The operator viewing the display screen 204 may be a pilot, a co-pilot, a navigator, or another crew member onboard the first aircraft. In another example, the operator may be a flight planner, a dispatcher, an air traffic controller, or the like that is off-board the first aircraft. The operator that is off-board may be associated with the first aircraft by scheduling the flight of the first aircraft and/or selecting one or more routes or paths of the aircraft during a scheduled flight. The system 100 displays the profile map 202 to provide an intuitive visualization of the automated airflow reports 200 relative to the altitude of the first aircraft along the first planned flight path 210. The profile map 202 is generated to assist pilots and/or flight planners to select flight paths or altitudes for the first aircraft that are smoother (e.g., less turbulent) than other flight paths or altitudes.

The controller 102 may periodically update the profile map 202 based on receipt of additional airflow reports 200 subsequent to generating the profile map 202. The controller 102 may update the profile map 202 over time to maintain the relevance of the displayed information.

In an example, the controller 102 may generate the profile map 202 to show multiple different flight paths (sequentially or concurrently), which enables the pilot or flight planner to compare the potential turbulence that could be encountered by the first aircraft on the scheduled flight. For example, the first flight path 210 may be a first candidate flight path, and the controller 102 may plot at least a second candidate flight path on the profile map 202. In an example, the multiple candidate flight paths may be concurrently displayed on the profile map 202. In another example, the candidate flight paths may be sequentially displayed on the profile map 202. For example, after viewing the first candidate flight path 210 as shown in Figure 2, the operator may use the input device 114 to enter a user input command to switch to viewing a second candidate flight path. As such, only the first candidate flight path 210 is shown on the profile map 202 during a first time period, and only the second candidate flight path is shown on the profile map 202 during a second time period. The operator can toggle between the different candidate flight paths and then select one of the candidate flight paths for the first aircraft to implement during the scheduled flight.

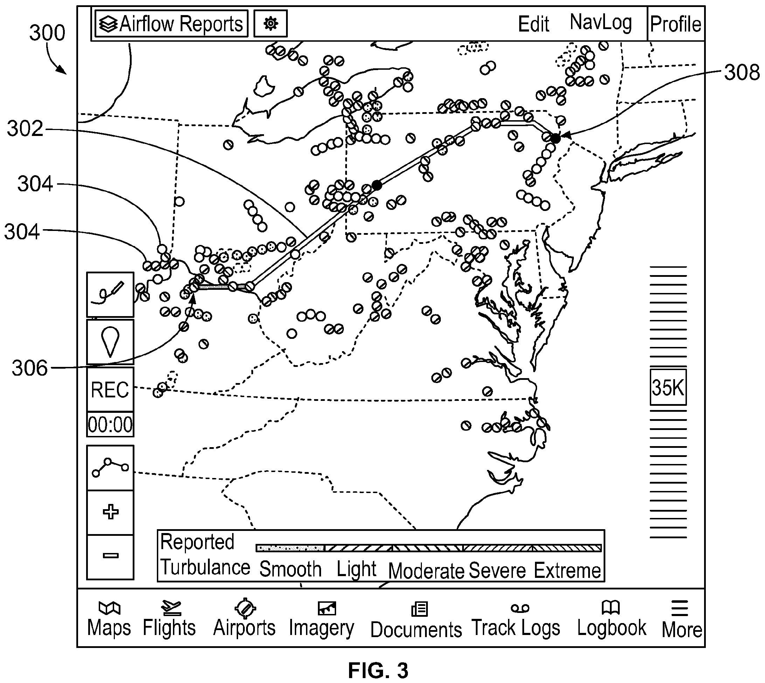

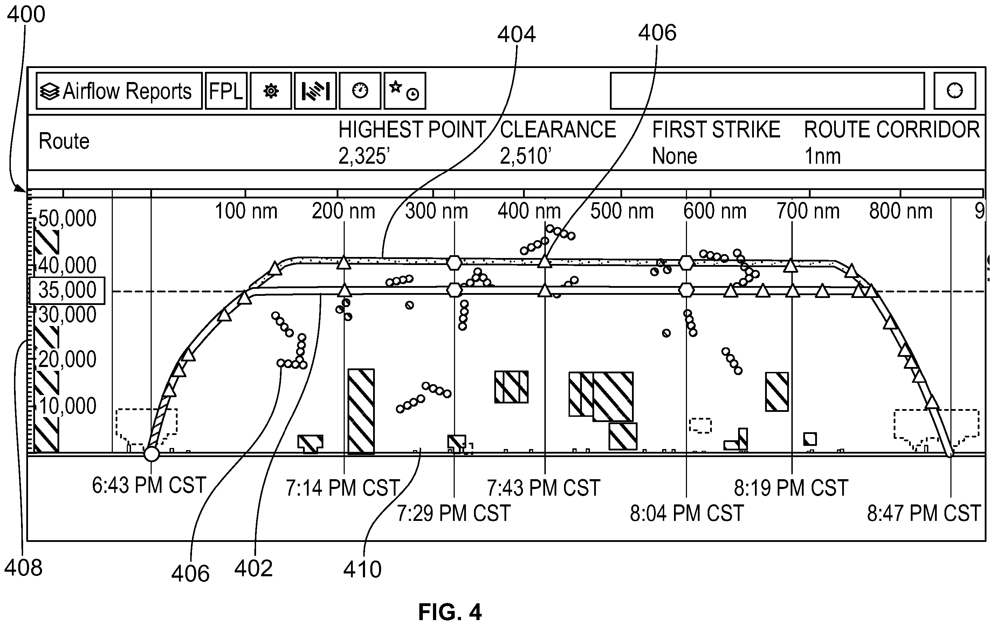

Figure 3 is a top-down geographic map 300 plotting a scheduled route 302 of the first aircraft and graphic indicia 304 that represent the airflow conditions in the received airflow reports 200. Figure 4 is a profile map 400 plotting a first flight path 402 and a second flight path 404 of the first aircraft along the scheduled route 302 that is shown in Figure 3 according to an embodiment. The profile map 400 also plots graphic indicia 406 that represent the airflow conditions in at least a subset of the received airflow reports 200. The profile map 400 may be the same or similar to the profile map 202 shown in Figure 2.

The controller 102 may generate both the top-down geographic map 300 (referred to herein as geographic map) and the profile map 400. The controller 102 may control the display device 108 to display both of the maps 300, 400 to enhance situational awareness for an operator and/or allow the operator to modify a planned flight path along the scheduled route 302 to reduce the amount and/or intensity of turbulence encountered on the flight. The display device 108 may display both maps 300, 400 concurrently on the display screen 204. Alternatively, an operator may toggle between viewing the geographic map 300 and the profile map 400 using the input device 114.

The geographic map 300 has a different perspective than the profile map 400. For example, the geographic map 300 has a top-down (e.g., birds-eye) perspective. The geographic map 300 shows multiple geographic jurisdictions, such as states, delineated by boundaries and bodies of water. The data points on the geographic map 300 are plotted to represent geographic coordinates, such as longitude and latitude. The profile map 400, as described above with reference to the profile map 202 in Figure 2, has a side profile perspective, as if looking at the flight of the first aircraft from ground level at a location that is a long distance away from the first aircraft. The profile map 400 shows altitude, which is not shown on the geographic map 300. The view shown by the profile map 400 may be perpendicular to the view shown by the geographic map 300. The graphic indicia 304 in the geographic map 300 may be similar to the graphic indicia 406 in the profile map 400, as both indicia 304, 406 are plotted based on the information in received airflow reports 200. The graphic indicia 304, 406 are all shown as dots (e.g., small circles) in the illustrated embodiments, but at least some of the graphic indicia 304 and/or the graphic indicia 406 may have different shapes in other embodiments.

The positions of the graphic indicia 304 on the geographic map 300 are based only on the geographic locations of the aircraft that generated the airflow reports 200 (e.g., are not generated based on the altitudes od the aircraft). For example, each graphic indicium 304 may be plotted at a coordinate position that corresponds to the longitude and latitude coordinates of the aircraft at the time that the airflow report 200 is generated. In comparison, the positions of the graphic indicia 406 on the profile map 400 are based on both the geographic locations of the aircraft as well as the altitudes of the aircraft. For example, the controller 102 uses the altitude to determine the position of each graphic indicium 406 along the vertical axis 408 representing altitude. The controller 102 uses the geographic location to determine the position of the graphic indicium 406 along the horizontal axis 410 representing time, location, or distance along the scheduled flight of the first aircraft.

The geographic map 300 shows the scheduled route 302 of the first aircraft from a starting location 306 (e.g., departure site) to an arrival location 308 (e.g., destination site). The geographic map 300 may be generated to show a multitude of graphic indicia 304 representing the airflow reports 200 that correspond to geographic locations within the field of view depicted in the geographic map 300. For example, the map 300 field of view in Figure 3 shows several states in the United States, and the controller 102 may plot graphic indicia 304 representing the airflow conditions of all airflow reports 200 generated by aircraft that are flying over the several states that are shown in the field of view. The airflow reports 200 that are generated by aircraft traveling near the scheduled route 302 may be relevant to the operator associated with the first aircraft. In the illustrated example, the scheduled route 302 travels through Ohio and Pennsylvania, among other states. The scheduled route 302 does not extend through North Carolina, so airflow reports 200 generated over North Carolina may not be relevant to the operator/first aircraft.

Optionally, the controller 102 may generate an aircraft icon for display on one or both of the maps 300, 400. The aircraft icon may represent the position of the first aircraft while the first aircraft travels on a flight path (e.g., flight path 402) along the scheduled route 302. The controller 102 may position the aircraft icon on the map(s) 300, 400 based on a current location of the first aircraft relative to earth. The controller 102 may periodically update the position of the aircraft icon on the map(s) 300, 400 to reflect movement of the first aircraft over time.

In an embodiment, the controller 102 may filter the airflow reports 200 that are received based on proximity of the geographic locations provided in the airflow reports 200 to the scheduled route 302. For example, the controller 102 may determine a relevance footprint which encompasses the scheduled route 302 and the surrounding areas within a designated proximity of the scheduled route 302. For example, the relevance footprint may be determined by extending a distance of the designated proximity in every direction from each point along the scheduled route 302. The designated proximity may be 1 mile, 2 miles, or the like. In an example, the controller 102 may filter the airflow reports 200 by only using a subset of the airflow reports 200 that have geographic locations within the relevance footprint for generating the graphic indicia 406 that are depicted on the profile map 400. Conversely, the controller 102 may not generate graphic indicia 406 for the airflow reports 200 that are outside of the relevance footprint. In effect, the graphic indicia 406 shown in Figure 4 represent the airflow reports 200 that are within the designated proximity of the scheduled route 302, and therefore are most relevant to the first aircraft. The airflow conditions represented by the graphic indicia 406 in Figure 4 are conditions that may be encountered by the first aircraft while flying along the scheduled route 302. The airflow conditions that are far away from the first aircraft are not graphed on the profile map 400.

In an example, the controller 102 may generate the profile map 400 to differentiate a first visual characteristic of the graphic indicia 406 for different airflow reports 200 based on the turbulence levels of the airflow conditions reported in the airflow reports 200. The first visual characteristic may be color, intensity (e.g., brightness), shape, surface texture (e.g., hatching), or the like. In an example, the first visual characteristic is color. For example, graphic indicia 406 that represent reports of smooth airflow are depicted as having a different color than graphic indicia 406 that represent reports of turbulent airflow. This information assists the operator (e.g., pilot or other flight planner) with determining which flight path to pursue on the scheduled route 302 during the flight. For example, the operator may select one flight path that has more smooth airflow areas and/or fewer turbulent airflow areas than another candidate flight path in an attempt the limit the turbulence encountered by the first aircraft during the flight.

In an example, the controller 102 may generate the profile map 400 to differentiate a second visual characteristic of the graphic indicia for different airflow reports 200 in addition to differentiating the first visual characteristic. The controller 102 may differentiate the second visual characteristic of the graphic indicia based on recency levels of the airflow reports 200. The recency level is an indicator of how recently the airflow report 200 was generated by the corresponding aircraft that generated the airflow report 200. Recency level is used to show how current or up-to-date is the information contained in the airflow report 200. Newer (e.g., fresher) airflow reports 200 are more relevant than older airflow reports 200 because the airflow conditions in the atmosphere change over time. For example, a smooth airflow condition that is reported for a first area may not be accurate or reliable after a certain length of time, such as a half hour or an hour. The controller 102 may differentiate the second visual characteristic of the graphic indicia by grouping the airflow reports 200 into multiple different age categories based on the times that the airflow reports 200 are generated. For example, the controller 102 may differentiate the graphic indicia 406 that represent airflow reports 200 that are newer from the graphic indicia 406 that represent airflow reports 200 that are older, and therefore less relevant (e.g., less accurate and reliable). In an example, the controller 102 may depict the graphic indicia 406 that represent a newer (e.g., younger) class of reports 200 with a greater intensity (e.g., brightness) than the graphic indicia 406 that represent an older class of reports 200. The controller 102 optionally may show more than two levels of recency, such as by showing three or more levels of fade based on three or more corresponding age buckets of the airflow reports 200.

In the illustrated example, the controller 102 may generate the profile map 400 to show multiple candidate flight paths for visual comparison by an operator. Each of the candidate flight paths may represent a path that may be followed by the first aircraft while traveling along the scheduled route 302 shown in Figure 3. The candidate flight paths may differ from each other in altitude over one or more portions of the flight. The profile map 400 in Figure 4 shows two candidate flight paths 402, 404. The second flight path 404 has a higher cruise altitude than the first flight path 402. For example, the cruise altitude of the second flight path 404 may be approximately 40,000 ft., and the cruise altitude of the first flight path 402 may be approximately 35,000 ft.

The controller 102 may enable the operator to select one of the different candidate flight paths for the first aircraft to implement during the flight along the scheduled route 302. The operator may select the flight path, such as either the first flight path 402 or the second flight path 404, based at least in part on consideration of the airflow conditions represented by the graphic indicia 406. In an example, the first flight path 402 may traverse through more graphic indicia 406 representing turbulent airflow than the second flight path 404. As a result, the operator may select the second flight path 404 for the first aircraft to follow, instead of the first flight path 402, in an attempt to reduce or limit the turbulence encountered on the flight. The controller 102 concurrently depicts both flight paths 402, 404 on the profile map 400 in Figure 4. Alternatively, the controller 102 plot the flight paths 402, 404 in sequence. For example, during a first time period the profile map 400 may display the first flight path 402 but not the second flight path 404, and during a second time period the profile map 400 may display the second flight path 404 but not the first flight path 402.

Optionally, the controller 102 may allow the operator to modify a flight path and/or generate a new flight path based on the information displayed in the profile map 400. For example, the operator may view the first flight path 402 and the graphic indicia 406 on the profile map 400. Based on the positions and visual characteristics of the graphic indicia 406, indicating the reported airflow conditions, the operator may use the input device 114 to generate a new flight path that is predicted to encounter less turbulence than the first flight path 402. For example, the new flight path may be the second flight path 404 shown in Figure 4.

In an embodiment, the controller 102 may automatically compare multiple different candidate flight paths and generate a flight path recommendation for the operator associated with the first aircraft. For example, the controller 102 may determine respective turbulence scores for multiple different candidate flight paths based on the airflow conditions of proximate airflow reports 200. The controller 102 may calculate a first turbulence score for the first flight path 402 on the scheduled route 302 based on the airflow conditions of a first subset of the graphic indicia 406 that are proximate to the first flight path 402. The controller 102 may calculate a second turbulence score for the second flight path 404 on the scheduled route 302 based on the airflow conditions of a second subset of the graphic indicia 406 that are proximate to the second flight path 404.

The turbulence scores may be calculated by assigning different quantitative values to the different airflow conditions that are reported in the airflow reports 200 that are proximate to the corresponding flight paths. The different airflow conditions may be the different turbulence levels. For example, a value of zero may be assigned to graphic indicia 406 representing reported smooth airflow; a value of 1 may be assigned to graphic indicia 406 representing reported light turbulence; a value of 2 may be assigned to graphic indicia 406 representing moderate turbulence; a value of 4 may be assigned to graphic indicia 406 representing severe turbulence; and a value of 6 may be assigned to graphic indicia 406 representing extreme turbulence. The controller 102 may determine the turbulence score for the first flight path 402 by adding the values of the graphic indicia 406 that the first flight path 402 intersects (within a designated margin threshold). The controller 102 may determine the turbulence score for the second flight path 404 by adding the values of the graphic indicia 406 that the second flight path 404 intersects (within the designated margin threshold). The controller 102 may determine turbulence scores for other candidate flight paths as well.

The controller 102 may select at least one of the flight paths as a recommended flight path for the first aircraft based on a comparison of the turbulence scores. In an example, the controller 102 selects the flight path that has the lowest turbulence score as the recommended flight path. With reference to Figure 4, the controller 102 may select the second flight path 404 as the recommended flight path in response to the second flight path 404 having a lower turbulence score than the first flight path 402. The controller 102 may then generate a flight path recommendation for display on the display device 108. The flight path recommendation indicates the recommended flight path. The flight path recommendation may be a text-based message and/or a visual indication that highlights the second flight path 404 as preferred. The controller 102 may use the display device 108 to display the flight path recommendation. Optionally, the controller 102 may control the communication device 110 to wirelessly communicate the flight path recommendation to a remote recipient device.

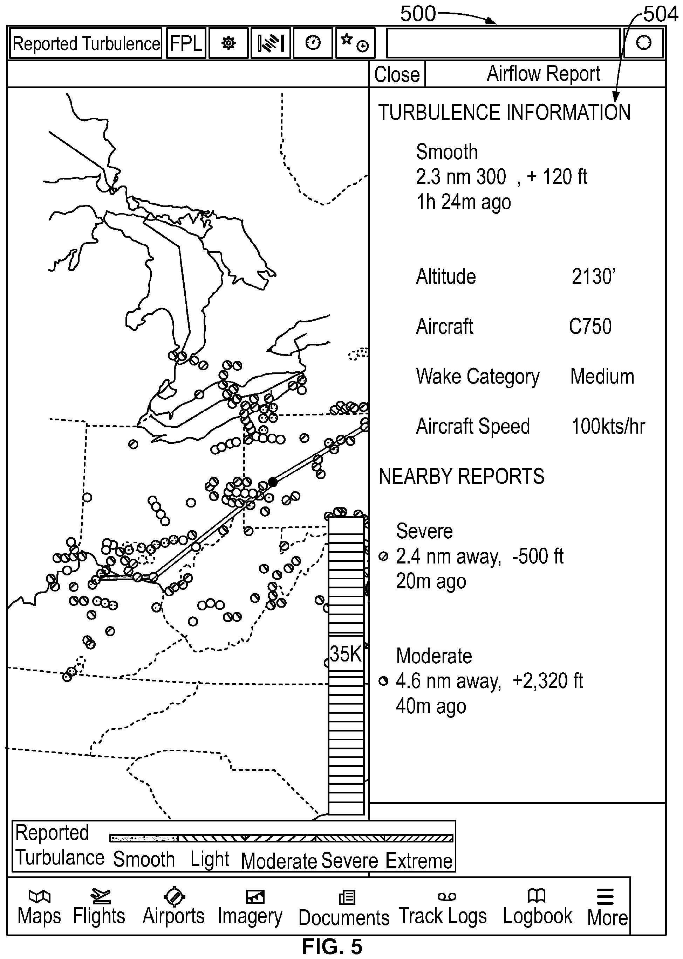

Figure 5 illustrates a portion of a graphical user interface 500 that includes a text box 504 according to an embodiment of the turbulence notification system 100. The controller 102 may generate the graphical user interface 500 for display by the display device 108. In an example, in addition to displaying the geographic map 300 shown in Figure 3 and/or the profile map 400 shown in Figure 4, the controller 102 may also display the text box 504. The text box 504 is generated to provide information about at least a first airflow report of the airflow reports 200. The first airflow report that is described in the text box 504 may be more proximate to a current location and a current altitude of the first aircraft than other airflow reports of the airflow reports 200. As the first aircraft travels during the flight along the scheduled route 302, the controller 102 may compare the current geographic location of the first aircraft and the current altitude of the first aircraft to the information of the received airflow reports 200 to identify one or more airflow reports that are closest to the first aircraft at a given time.

After identifying the first airflow report, the controller 102 may generate the text box 504 that provides the airflow condition of the first airflow report, and the may display the text box 504 on the display device 108 to increase the situational awareness of the operator associated with the first aircraft. The text box 504 in Figure 5 states that the airflow condition of the first (e.g., most proximate) airflow report is smooth. Optionally, the text box 504 may include information about additional airflow reports that are proximate to the first aircraft. For example, the text box 504 states that one nearby airflow report has a severe airflow condition and another nearby airflow report has a moderate airflow condition.

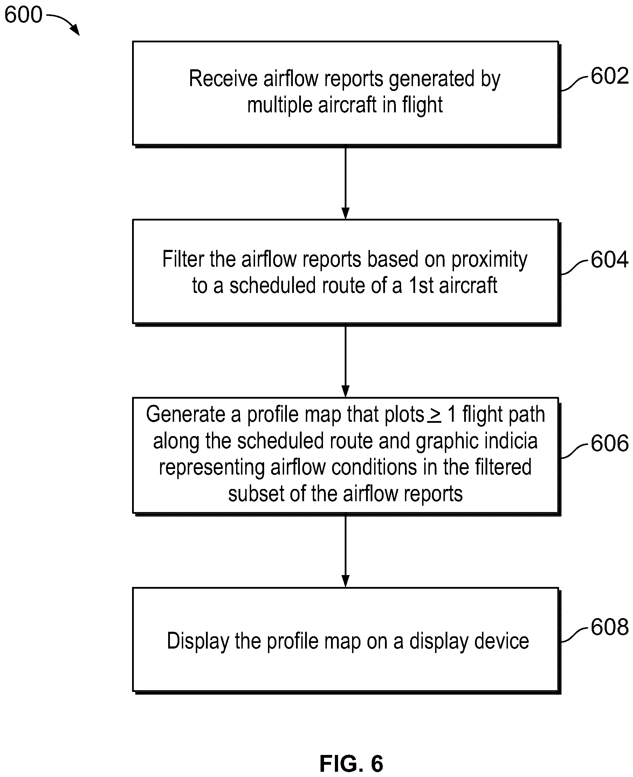

Figure 6 is a flow chart 600 of a method for predicting and managing turbulence for a scheduled flight according to an example of the present disclosure. The method may be performed, in whole or in part, by the controller 102 of the turbulence notification system 100. Optionally, the method may include additional steps than shown in Figure 6, fewer steps than shown in Figure 6, and/or different steps than the steps shown in Figure 6.

At step 602, airflow reports 200 are received by the controller 102. The airflow reports 200 are generated by multiple aircraft while in flight. Each of the airflow reports 200 may include a geographic location of a respective aircraft of the multiple aircraft that generated the airflow report 200, an altitude of the respective aircraft, and an airflow condition experienced by the respective aircraft and caused by atmospheric airflow. The airflow condition may describe a level of a force event experienced by the respective aircraft that generated the airflow report 200. The level may be one of a plurality of different turbulence levels of increasing severity (e.g., smooth or chop, light, moderate, severe, and extreme). In an example, the airflow reports 200 may be received on a periodic basis as additional airflow reports 200 are generated. The controller 102 may receive the airflow reports 200 from an automatic dependent surveillance broadcast (ADS-B) receiver 112 mounted onboard a first aircraft. The ADS-B receiver 112 may wirelessly receive the airflow reports 200.

At step 604, the airflow reports 200 are filtered by the controller 102 based on proximity of the geographic locations provided in the airflow reports 200 to a scheduled route 302 of the first aircraft.

At step 606, the controller 102 generates a profile map 202, 400 that plots at least a first flight path 210, 402 of the first aircraft on the scheduled route 302 of the first aircraft and graphic indicia 212, 406. The graphic indicia 212, 406 may represent the airflow conditions in only a subset of the airflow reports 200. The subset includes only the airflow reports 200 that have geographic locations within a threshold proximity of the scheduled route 302. The profile map 202, 400 has a vertical axis 206, 408 representing altitude and a horizontal axis 208, 410 representing one of time, location, or distance. The controller 102 may generate the profile map 202, 400 by positioning the graphic indicia 212, 406 on the profile map 202, 400 at locations along the vertical axis 206, 408 and the horizontal axis 208, 410 that correspond to the geographic locations and the altitudes in the filtered subset of the airflow reports 200. The controller 102 may generate the profile map 202, 400 to differentiate a first visual characteristic of the graphic indicia 212, 406 for different airflow reports based on a turbulence level of the airflow condition. In an example, the controller 102 may also differentiate a second visual characteristic of the graphic indicia 212, 406 for different airflow reports based on a recency level of the airflow report. In one example, the first visual characteristic is color, and the second visual characteristic is intensity.

At step 608, the controller 102 controls a display device 108 to display the profile map 202, 400 for observation by an operator associated with the first aircraft. The operator may be a pilot, a flight planner, or the like.

Optionally, the method may include generating the profile map 202, 400 to include plotting at least a second flight path 404 of the first aircraft on the scheduled route 302. Optionally, the profile map 202, 400 may concurrently display both the first and second flight paths 402, 404. Alternatively, the profile map 202, 400 may display the first flight path 402 but not the second flight path 404 during a first time period and may display the second flight path 404 but not the first flight path 402 during a second time period.

Optionally, the method may include identifying at least a first airflow report of the airflow reports 200 that is more proximate to a current location and a current altitude of the first aircraft than other airflow reports of the airflow reports 200. The controller 102 may generate a text box 504 that provides the airflow condition of the at least first airflow report, The controller 102 may display the text box 504 on the display device 108.

In an example, the method may provide a flight path recommendation to assist the operator with selecting a flight path for the first aircraft to follow along the scheduled route 302. For example, the controller 102 may determine a first turbulence score for the first flight path 210, 402 of the first aircraft on the scheduled route 302 based on the airflow conditions of a first subset of the graphic indicia 212, 406 that are proximate to the first flight path 210, 402. The controller 102 may determine a second turbulence score for a second flight path 404 of the first aircraft on the scheduled route 302 based on the airflow conditions of a second subset of the graphic indicia 212, 406 that are proximate to the second flight path 404. The second flight path 404 has a different altitude than the first flight path 210, 402. The controller 102 may select the first flight path 210, 402, the second flight path 402, or another flight path as a recommended flight path for the first aircraft based on a comparison of the turbulence scores. The controller 102 may generate the flight path recommendation for display on the display device 108. The flight path recommendation indicates the recommended flight path.

The turbulence notification system 100 in one or more embodiments may normalize the airflow reports to make the reported turbulence levels aircraft-independent (e.g., aircraft-agnostic). For example, the airflow conditions (e.g., turbulence levels) provided in the airflow reports are inherently aircraft-dependent. A first aircraft may determine the airflow condition by measuring the effect of the atmospheric airflow on the first aircraft. For example, the first aircraft may determine a force of airflow exerted on the wing, vertical acceleration of the aircraft caused by the airflow, and/or the like. These measured parameters inherently depend on the mass (e.g., weight) and the size of the aircraft. The controller 102 may receive the airflow reports and normalize the reported airflow conditions to standardize the information for general applicability to all aircraft. By normalizing the airflow conditions, the controller 102 can then modify the normalized data for a specific aircraft. For example, the controller 102 may predict effective turbulence levels that a first aircraft may experience on a flight. The effective turbulence levels refer to the expected or predicted effect that the atmospheric airflow will have on the first aircraft specifically, rather than the actual effect that the airflow had on the reporting aircraft that generated the airflow report.

A technical effect of the turbulence notification system 100 normalizing the airflow conditions is that the effective turbulence levels that are generated and displayed to the operator may provide more relevant and accurate information than simply plotting the airflow conditions (e.g., turbulence levels) as reported by the various reporting aircraft. By normalizing the turbulence levels provided in the airflow reports, the controller 102 can tailor the information specifically to the first aircraft which provides the operator helpful information predicting how the airflow conditioned experienced by the different reporting aircraft would be experienced by the first aircraft as the first aircraft travels on a flight.

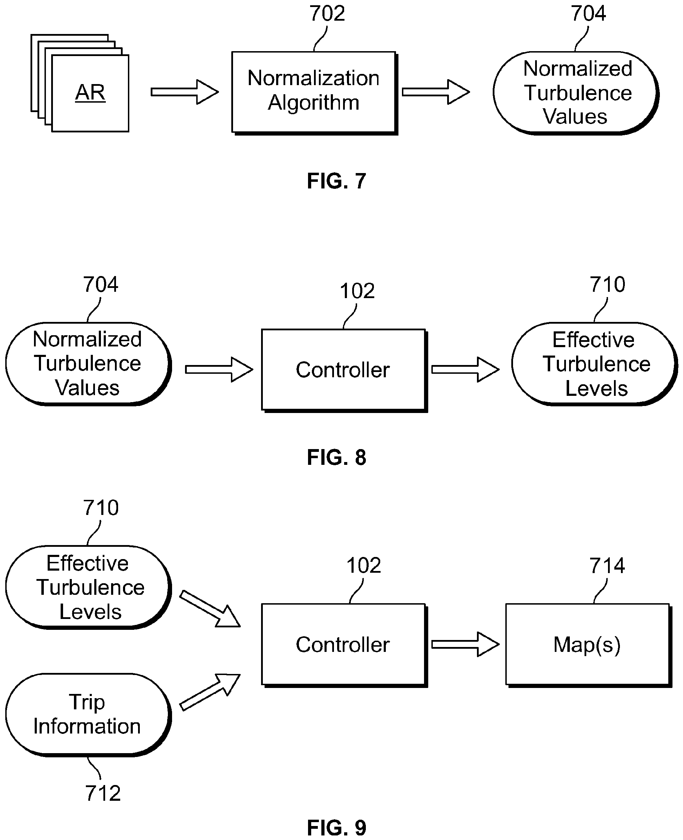

Figure 7 illustrates a normalization algorithm 702 of the turbulence notification system 100 receiving the airflow reports 200 and generating normalized turbulence values 704 based on the airflow reports 200 according to an embodiment. In an example, the normalization algorithm 702 may be a component of the controller 102. For example, the normalization algorithm 702 may be stored in the memory device 106 (shown in Figure 1). In another example, the normalization algorithm 702 is a separate and discrete component from the controller 102. The controller 102 may input the airflow reports 200, or data obtained from the airflow reports 200, into the normalization algorithm 702.

The normalization algorithm 702 may be a statistical formula that scales a data set from the airflow reports 200 for all values of the data to fall within a standard range. In a first example, the standard range may be from 0 to 1 (either inclusive or exclusive of the endpoints). In a second example, the standard range may be from -1 to +1. Even if the values of the relevant parameter to be scaled vary significantly in the input data set (e.g., the airflow reports 200), the normalization algorithm 702 outputs normalized values, representative of the input data set, that are all within the standard range.

Each of the airflow reports 200 includes an airflow condition, which is also referred to herein as a reported turbulence level. The reported turbulence levels indicate the level or severity of turbulence experienced by the respective aircraft that generates the airflow report 200. For example, the reported turbulence levels may include smooth, light, moderate, severe, and/or extreme. The reported turbulence levels may be input into the normalization algorithm 702. In an example, another parameter from the airflow reports 200 that is input into the normalization algorithm 702 (e.g., by the controller 102) is information about the aircraft that generated each corresponding airflow report 200. The normalization algorithm 702 may scale the reported turbulence levels experienced by the reporting aircraft based in part on physical characteristics and/or motive characteristics of the reporting aircraft, to generate the normalized turbulence values.

The information about the reporting aircraft that is input to the normalization algorithm 702 may include a size of the reporting aircraft, a weight of the reporting aircraft, a speed of the reporting aircraft, and/or an identifying characteristic of the reporting aircraft. The size may represent a total length of the aircraft from nose to tail, a width or wingspan from wing tip to wing tip, a total footprint of the aircraft in area, a wing area of at least one of the wings of the aircraft, and/or the like. The weight of the reporting aircraft may represent the weight of the reporting aircraft in an unloaded state without passengers and/or cargo and/or the weight in a loaded state including passengers and/or cargo. This information about size and/or weight of the respective aircraft that generated the airflow report 200 may be included in the airflow report 200. The speed of the aircraft may also be included in the airflow report 200. The size and/or weight may be examples of identifying characteristics of the respective reporting aircraft that are included in the airflow reports 200. Optionally, some or all of the airflow reports 200 may provide an identifying characteristic of the respective reporting aircraft that does not include the size and/or weight. For example, an airflow report 200 may provide a unique identifier for the respective reporting aircraft and/or a type of the respective reporting aircraft. The unique identifier may be an alphanumeric sequence that is unique to the respective reporting aircraft relative to all other aircraft that would be in the same jurisdiction. The type may indicate the make and model of the aircraft, the year the aircraft was produced, and/or the like. If an airflow report 200 lacks information about the size and/or weight of the aircraft, the controller 102 may use the unique identifier and/or the type of the reporting aircraft to look up a predicted size and/or weight of the aircraft. For example, the controller 102 may refer to a look up table in a database that provides different size and/or weight data for different types of aircraft. The controller 102 may then input the predicted size and/or predicted weight into the normalization algorithm 702 as a proxy for an actual value of the size and/or weight of the reporting aircraft.

The normalization algorithm 702 may use the speed, size, and/or weight of the reporting aircraft to determine how to scale the reported turbulence levels in the airflow reports 200 so that the output normalized turbulence values are all within the standard range. In an example, the normalization algorithm 702 may compare the speeds, the sizes and/or the weights of the reporting aircraft to at least one baseline value to determine scaling factors. The baselines value(s) may include a baseline speed, a baseline weight, and/or a baseline size. The baseline value(s) represent reference values. Optionally, the baseline value(s) may be selected to be at a median or mean of a group of different aircraft. In a simple case, the baseline size may be selected as the size of a mid-class aircraft, and the baseline weight may be selected as the weight of the mid-class aircraft. The baseline speed may be selected as an average or median speed of the reporting aircraft. In another example, the baseline speed may be a designated or regulated speed, such as a speed limit, for traveling through a certain jurisdiction or airspace. The normalization algorithm 702 may scale the reported turbulence levels of the airflow reports up or down based on the comparison of the speed, size, and/or weight of the specific reporting aircraft to the baseline value(s).

In an example, the normalization algorithm 702 may determine that a size and/or weight of a first reporting aircraft is above the baseline value(s). The first reporting aircraft may be a large commercial jet. The turbulence experienced by the first reporting aircraft may be more muted or light compared to how the same airflow would affect smaller aircraft. The normalization algorithm 702 may scale up the severity of a first reported turbulence level in the airflow report generated by the first reporting aircraft. If the first reported turbulence level is light, the normalization algorithm 702 may generate a first normalized turbulence value that indicates a turbulence level of moderate or severe. To be clear, the first normalized turbulence value may be a numerical value in the standard range, such as between 0 and 1. The numerical value that is output may be representative of a severity level that is greater than the severity initially reported by the first reporting aircraft due to the large size of the first reporting aircraft.

In another example, the normalization algorithm 702 may determine that a size and/or weight of a second reporting aircraft is below the baseline value(s). The second reporting aircraft may be a small private jet. The turbulence experienced by the second reporting aircraft may be more tumultuous compared to how the same airflow would affect larger aircraft. The normalization algorithm 702 may scale down the severity of a second reported turbulence level in the airflow report generated by the second reporting aircraft. If the second reported turbulence level is severe, the normalization algorithm 702 may generate a second normalized turbulence value that indicates a turbulence level of moderate or light. The numerical value that is output may be representative of a severity level that is less than the severity initially reported by the second reporting aircraft due to the small size of the second reporting aircraft.

In another example, the normalization algorithm 702 may determine that a speed of a third reporting aircraft is above the baseline speed value. The third reporting aircraft may be flying faster than the baseline speed. As a result, the turbulence experienced by the third reporting aircraft may be more muted or light compared to how the same airflow would affect slower moving aircraft. The normalization algorithm 702 may scale up the severity of a third reported turbulence level in the airflow report generated by the third reporting aircraft. If the third reported turbulence level is light, the normalization algorithm 702 may generate a third normalized turbulence value that indicates a turbulence level of moderate or severe.

The normalization algorithm 702 may account for contradictory factors when generating the normalized turbulence values. For example, if a relatively small, lightweight aircraft is traveling at a relatively fast speed, the size/weight aspect would weigh toward scaling down the severity of a reported turbulence level in the airflow report generated by that aircraft. But, the speed aspect would weigh toward scaling up the severity of the reported turbulence level in the airflow report, which would reduce the amount that the severity is scaled down. The normalization algorithm 702 may assign weights to the multiple factors (e.g., speed, size, weight, etc.) based on the amount of deviation of the respective factor from the corresponding baseline value. The normalization algorithm 702 may utilize the weights for determining the normalized turbulence values.

The normalized turbulence values 704 may be values within the standard range that represent scaled versions of the reported turbulence levels experienced by the various different reporting aircraft. The normalization algorithm 702 may scale the reported turbulence levels based on the speeds, sizes, and/or weights of the reporting aircraft to output aircraft-independent (e.g., aircraft-agnostic) normalized turbulence values. For example, the normalized turbulence values may represent the effect of the atmospheric airflow on an aircraft having a baseline (e.g., reference) speed, size, and weight. By transforming the reported turbulence levels to the normalized turbulence values, the controller 102 can then apply the normalized turbulence values to a specific aircraft to predict how that specific aircraft will encounter the same atmospheric airflow while in flight.

In an example, the controller 102 may filter the airflow reports 200 based on proximity of the geographic locations provided in the airflow reports 200 to the scheduled route of a first aircraft. The first aircraft may be scheduled to take a trip along the scheduled route. The first aircraft may be in flight during the trip at the time that the airflow reports 200 are received and filtered. Optionally, the first aircraft may not have started the trip yet at the time that the airflow reports 200 are received and filtered. The controller 102 may filter out the airflow reports 200 that are not within the threshold proximity of the scheduled route. In an example, the controller 102 may only input to the normalization algorithm 702 the airflow reports 200 that are within the threshold proximity of the scheduled route. Alternatively, the controller 102 may filter the airflow reports 200 after the normalization algorithm 702 generates the normalized turbulence values.

Figure 8 illustrates the controller 102 of the turbulence notification system 100 receiving the normalized turbulence values 704 and determining effective turbulence levels 710 based on the normalized turbulence values 704 according to an embodiment. The controller 102 may determine the effective turbulence levels 710 specific to a first aircraft based on the normalized turbulence values 704 and a first identifying characteristic of the first aircraft. The first aircraft could be any specific aircraft that is currently in flight or scheduled to fly in the near future (otherwise the turbulence reports would be stale and irrelevant). The effective turbulence levels 710 predict an effect that the atmospheric airflow would have on the first aircraft at the geographic locations of the airflow reports 200. The first identifying characteristic of the first aircraft may be the size of the first aircraft, the weight of the first aircraft, a unique identifier of the first aircraft, a type of the first aircraft, or the like. The first identifying characteristic may be input by an operator associated with the first aircraft, received in a message, or the like. The controller 102 may use a look-up table to determine a predicted size and/or weight of the first aircraft if the first identifying characteristic is the unique identifier or the type of the aircraft.

The controller 102 may scale the normalized turbulence values 704 based on the size and/or weight of the first aircraft (e.g., relative to the baseline value(s)) to determine the effective turbulence levels 710. For example, if the first aircraft is a large aircraft (e.g., larger and heavier than the baseline values), the controller 102 may scale down the normalized turbulence values 704 to reflect less predicted turbulence severity in the output effective turbulence levels 710. Conversely, if the first aircraft is smaller than the baseline value(s), the controller 102 may scale up the normalized turbulence values 704 to reflect greater predicted turbulence severity in the output effective turbulence levels 710. In an example, the effective turbulence levels 710 may be different severity classes or categories of turbulence. The different classes in an example may include smooth, light, moderate, severe, and extreme. Different classes of turbulence may be categorized in different examples. For example, the effective turbulence levels 710 may be values from 0 to 10. The effect is that the controller 102 automatically transforms the aircraft-independent normalized turbulence values 704, based on a physical characteristic of the first aircraft, to generate the effective turbulence levels 710 that indicate predicted forces of airflow on the first aircraft when the first aircraft is in flight.

In an example, the controller 102 may scale the normalized turbulence values 704 based on the speed of the first aircraft (e.g., relative to the baseline speed) to determine the effective turbulence levels 710. For example, if the first aircraft is traveling faster than the baseline speed, the controller 102 may scale down the normalized turbulence values 704 to indicate, in the output effective turbulence levels 710, that the first aircraft is predicted to experience less severe turbulence than is shown in the normalized turbulence values 704. Conversely, if the first aircraft is flying slower than the baseline speed, the controller 102 may scale up the normalized turbulence values 704 to reflect greater predicted turbulence severity in the output effective turbulence levels 710.

Figure 9 illustrates the controller 102 of the turbulence notification system 100 receiving the effective turbulence levels 710 and generating one or more maps 714 based on the effective turbulence levels 710 and trip information 712 according to an embodiment. The map(s) 714 may include the top-down geographic map 300 shown in Figure 3 and/or the profile maps 202, 400 shown in Figures 2 and 4, respectively. The trip information 712 may include the scheduled route of the first aircraft on a scheduled trip, at least one flight path of the first aircraft along the scheduled route, a departure time, a planned arrival time, and/or the like. The controller 102 may generate the map(s) 714 to plot the scheduled route of the first aircraft and graphic indicia representing the effective turbulence levels 710 that are determined. The controller 102 may generate the map(s) 714 to plot the graphic indicia at locations along vertical and horizontal axes of the map(s) 714 that correspond to the geographic locations of the airflow reports. The controller 102 may generate the map to differentiate a visual characteristic of the graphic indicia corresponding to different effective turbulence levels 710 that are specific to the first aircraft. For example, a first group of the effective turbulence levels 710 representing smooth airflow for the first aircraft may be displayed in a first color on the map(s) 714, and a second group the effective turbulence levels 710 representing moderate turbulence for the first aircraft may be displayed in a second color on the map(s) 714. Light, severe, and extreme turbulence may be indicated by different colors of graphic indicia on the map(s) 714.

In an example, the map(s) 714 include a profile map as shown in Figures 2 and 4. The profile map has a vertical axis that represents altitude. The controller 102 generates the profile map to depict at least one flight path of the first aircraft along the scheduled route. The airflow reports 200 include altitudes of the reporting aircraft. The controller 102 may generate the profile map by positioning the graphic indicia at locations along the vertical axis that correspond to the altitudes of the reporting aircraft as provided in the airflow reports 200. The graphic indicia in this example represent the effective turbulence levels 710.

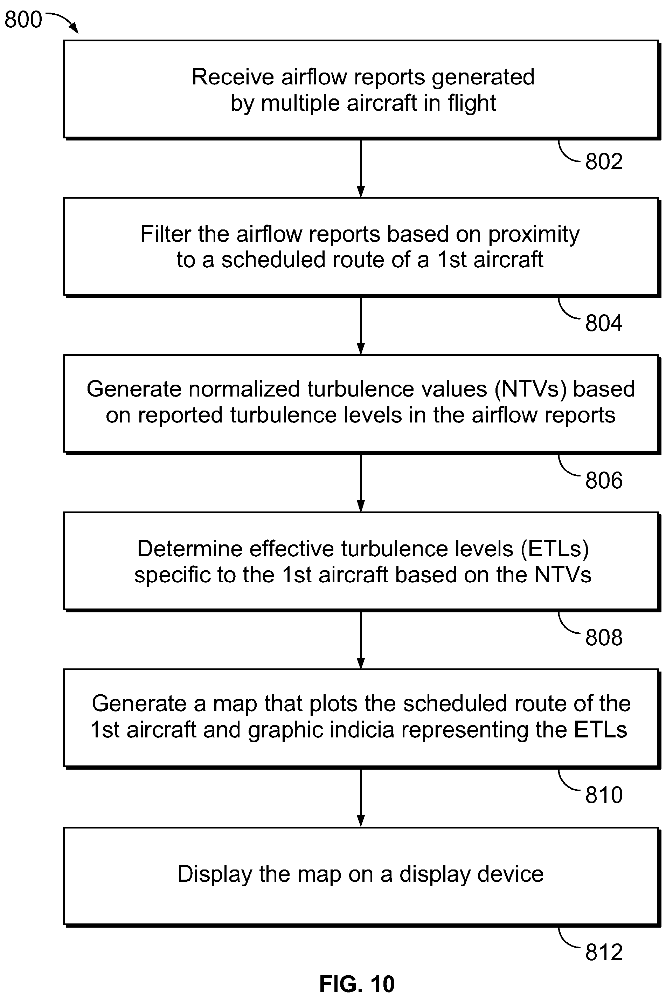

Figure 10 is a flow chart 800 of a method for estimating turbulence expected to be encountered by a first aircraft during a flight based on airflow reports from other aircraft according to an example of the present disclosure. The method may be performed, in whole or in part, by the controller 102 of the turbulence notification system 100. Optionally, the method may include additional steps not shown in Figure 10, fewer steps than shown in Figure 10, and/or different steps than the steps shown in Figure 10.

At step 802, airflow reports 200 are obtained that are generated by multiple reporting aircraft while the reporting aircraft are in flight. Each of the airflow reports includes a geographic location of the respective reporting aircraft that generated the airflow report, a reported turbulence level experienced by the respective reporting aircraft due to atmospheric airflow, and an identifying characteristic of the respective reporting aircraft. The airflow reports 200 may also include a speed of the reporting aircraft. The airflow reports 200 may be obtained by receiving the airflow reports 200 via a communication device. The communication device may be an ADS-B receiver 112 mounted on a first aircraft. In another example, the airflow reports 200 may be obtained by accessing at least some of the airflow reports 200 from a data storage device (e.g., memory device). At step 804, the airflow reports 200 may be filtered by the controller 102 based on proximity of the geographic locations provided in the airflow reports 200 to a scheduled route 302 of the first aircraft.

At step 806, normalized turbulence values 704 may be generated based on the reported turbulence levels in the airflow reports 200 and the speed, size, and/or weight of the reporting aircraft. In an example, each of the normalized turbulence values 704 may be generated by inputting the reported turbulence level and at least one of the speed, the size, the weight, or the identifying characteristic of the reporting aircraft from each of the airflow reports into a normalization algorithm 702 that is configured to output the normalized turbulence values 704. The normalized turbulence values 704 may be generated so that all of the normalized turbulence values 704 are within a standard range. The normalized turbulence values 704 may be generated by comparing (i) the at least one of the speeds, the sizes, or the weights of the reporting aircraft to (ii) at least one baseline value. One normalized turbulence value 704 may be generated by scaling up a severity of a first reported turbulence level by a first reporting aircraft in response to the at least one of the speed, the size, or the weight of the first reporting aircraft being above at least one baseline value. A second normalized turbulence value 704 may be generated by scaling down a severity of a second reported turbulence level by a second reporting aircraft of the reporting aircraft in response to the at least one of the speed, the size, or the weight of the second reporting aircraft being below the at least one baseline value.

At step 808, effective turbulence levels 710 specific to the first aircraft are determined based on the normalized turbulence values 704 and a first identifying characteristic of the first aircraft. The effective turbulence levels 710 predict an effect of the atmospheric airflow on the first aircraft at the geographic locations of the airflow reports 200.

At step 810, at least one map 714 is generated that plots a scheduled route 302 of the first aircraft and graphic indicia 212 representing the effective turbulence levels that are determined. Each map 714 is generated to plot the graphic indicia at locations along vertical and horizontal axes of the map 714 that correspond to the geographic locations of the airflow reports. The map 714 may be a profile map 202, 400. At step 812, the at least one map 714 that is generated is displayed on a display device 108 for observation by an operator associated with the first aircraft.

Further, the present disclosure comprises, without limitation, the following examples:
According to a first example, there is provided a method comprising:
obtaining, at a controller comprising one or more processors, airflow reports that are generated by multiple reporting aircraft while the reporting aircraft are in flight, wherein each of the airflow reports includes a geographic location of the respective reporting aircraft that generated the airflow report, a reported turbulence level experienced by the respective reporting aircraft due to atmospheric airflow, and an identifying characteristic of the respective reporting aircraft;
generating normalized turbulence values based on the reported turbulence levels in the airflow reports and at least one of sizes of the reporting aircraft or weights of the reporting aircraft;
determining effective turbulence levels specific to a first aircraft based on the normalized turbulence values and a first identifying characteristic of the first aircraft, wherein the effective turbulence levels predict an effect of the atmospheric airflow on the first aircraft at the geographic locations of the airflow reports; and
generating, via the controller, a map that plots a scheduled route of the first aircraft and graphic indicia representing the effective turbulence levels that are determined, wherein the map is generated to plot the graphic indicia at locations along vertical and horizontal axes of the map that correspond to the geographic locations of the airflow reports.

Example 2. The method of Example 1, wherein each of the airflow reports includes a speed of the respective reporting aircraft, and generating the normalized turbulence values comprises generating the normalized turbulence values based on the speeds of the reporting aircraft.

The method of example 2, wherein generating the normalized turbulence values comprises comparing (i) the at least one of the speeds, the sizes, or the weights of the reporting aircraft to (ii) at least one baseline value.

The method of any of examples 1-3, wherein each of the normalized turbulence values is generated by inputting the reported turbulence level and at least one of the size, the weight, or the identifying characteristic of the respective reporting aircraft from each of the airflow reports into a normalization algorithm that is configured to output the normalized turbulence values.

The method of any of example 1-4, wherein generating the normalized turbulence values comprises generating the normalized turbulence values so that all of the normalized turbulence values are within a standard range.

The method of any of example 1-5, wherein generating the normalized turbulence values comprises scaling up a severity of a first reported turbulence level by a first reporting aircraft of the reporting aircraft in response to the at least one of the size or the weight of the first reporting aircraft being above at least one baseline value.

The method of Example 6, wherein generating the normalized turbulence values comprises scaling down a severity of a second reported turbulence level by a second reporting aircraft of the reporting aircraft in response to the at least one of the size or the weight of the second reporting aircraft being below the at least one baseline value.

The method of any of Examples 1-7, wherein each of the airflow reports includes an altitude of the respective reporting aircraft, wherein the map is a profile map that depicts at least one flight path of the first aircraft along the scheduled route and the vertical axis represents altitude, wherein generating the map comprises positioning the graphic indicia at locations along the vertical axis that correspond to the altitudes in the airflow reports.

The method of any of Examples 1-8, further comprising displaying the map that is generated on a display device for observation by an operator associated with the first aircraft.

The method of any of Examples 1-9, wherein the identifying characteristic of the respective reporting aircraft comprises at least one of a unique identifier of the reporting aircraft, a type of the reporting aircraft, the weight of the reporting aircraft, or the size of the reporting aircraft.

The method of any of Examples 1-10, further comprising filtering the airflow reports based on proximity of the geographic locations provided in the airflow reports to the scheduled route of the first aircraft, wherein generating the map comprises plotting the graphic indicia that corresponds only to a subset of the airflow reports having geographic locations within a threshold proximity of the scheduled route.

The method of any of Examples 1-11, wherein the controller is disposed onboard the first aircraft and obtaining the airflow reports comprises the controller receiving the airflow reports from an automatic dependent surveillance broadcast (ADS-B) receiver mounted onboard the first aircraft, the ADS-B receiver configured to wirelessly receive the airflow reports.

Example 13. A turbulence notification system comprising:
a controller including one or more processors, the controller configured to obtain airflow reports that are generated by multiple reporting aircraft while the reporting aircraft are in flight, wherein each of the airflow reports includes a geographic location of the respective reporting aircraft that generated the airflow report, a reported turbulence level experienced by the respective reporting aircraft due to atmospheric airflow, and an identifying characteristic of the respective reporting aircraft,
wherein the controller is configured to generate normalized turbulence values based on the reported turbulence levels in the airflow reports and at least one of a size of the reporting aircraft or a weight of the reporting aircraft,
wherein the controller is configured to determine effective turbulence levels specific to a first aircraft based on the normalized turbulence values and a first identifying characteristic of the first aircraft, wherein the effective turbulence levels predict an effect of the atmospheric airflow on the first aircraft at the geographic locations of the airflow reports, and
the controller is configured to generate a map that plots a scheduled route of the first aircraft and graphic indicia representing the effective turbulence levels that are determined, wherein the controller is configured to plot the graphic indicia at locations along vertical and horizontal axes of the map that correspond to the geographic locations of the airflow reports.

Example 14. The turbulence notification system of Example 13, further comprising a display device communicatively connected to the controller, wherein the controller is configured to display the map that is generated on the display device for observation by an operator associated with the first aircraft.

Example 15. The turbulence notification system of Example 13 or Clause 14, further comprising a normalization algorithm, wherein the controller is configured to generate the normalized turbulence values by inputting the reported turbulence level and at least one of the size, the weight, or the identifying characteristic of the reporting aircraft from each of the airflow reports into a normalization algorithm that is configured to output the normalized turbulence values so that all of the normalized turbulence values are within a standard range.

Example16. The turbulence notification system of any of Examples 13-15, wherein the controller is configured to generate the normalized turbulence values by comparing (i) the at least one of the sizes or the weights of the reporting aircraft to (ii) at least one baseline value.

Example 17. The turbulence notification system of any of Examples 13-16, wherein the controller is configured to generate the normalized turbulence values by scaling up a severity of a first reported turbulence level by a first reporting aircraft of the reporting aircraft in response to the at least one of the size or the weight of the first reporting aircraft being above at least one baseline value, and scaling down a severity of a second reported turbulence level by a second reporting aircraft of the reporting aircraft in response to the at least one of the size or the weight of the second reporting aircraft being below the at least one baseline value.

Example 18. The turbulence notification system of any of Examples 13-17, wherein each of the airflow reports includes an altitude of the respective reporting aircraft and the vertical axis of the map represents altitude, wherein the controller is configured to generate the map to depict at least one flight path of the first aircraft along the scheduled route, the controller configured to position the graphic indicia at locations along the vertical axis that correspond to the altitudes in the airflow reports.

Example 19. The turbulence notification system of any of Clauses 13-18, wherein the controller is configured to filter the airflow reports based on proximity of the geographic locations provided in the airflow reports to the scheduled route of the first aircraft, wherein the controller is configured to generate the map comprises by only plotting the graphic indicia that correspond to a subset of the airflow reports having geographic locations within a threshold proximity of the scheduled route.

Example 20. The turbulence notification system of any of Examples 13-19, wherein the controller is disposed onboard the first aircraft and the controller is configured to obtain the airflow reports by receiving the airflow reports from an automatic dependent surveillance broadcast (ADS-B) receiver mounted onboard the first aircraft, the ADS-B receiver configured to wirelessly receive the airflow reports.

Example 21. A computer readable storage medium for management of a flight of an aircraft comprising programmed instructions which, when executed by a computer device, cause the turbulence notification system according to any of examples of 13 to 20 to carry out the steps of the method of any of examples 1 to 12.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method (600, 800) comprising:
obtaining, at a controller (102) comprising one or more processors (104), airflow reports (200) that are generated by multiple reporting aircraft while the reporting aircraft are in flight, wherein each of the airflow reports (200) includes a geographic location of the respective reporting aircraft that generated the airflow report (200), a reported turbulence level experienced by the respective reporting aircraft due to atmospheric airflow, and an identifying characteristic of the respective reporting aircraft;
generating normalized turbulence values (704) based on the reported turbulence levels in the airflow reports (200) and at least one of size of the reporting aircraft or weights of the reporting aircraft;
determining effective turbulence levels (710) specific to a first aircraft based on the normalized turbulence values (704) and a first identifying characteristic of the first aircraft, wherein the effective turbulence levels (710) predict an effect of the atmospheric airflow on the first aircraft at the geographic locations of the airflow reports (200); and
generating, via the controller (102), a map (714) that plots a scheduled route (302) of the first aircraft and graphic indicia (212, 304, 406) representing the effective turbulence levels (710) that are determined, wherein the map (714) is generated to plot the graphic indicia (212, 304, 406) at locations along vertical and horizontal (206, 208) axes of the map (714) that correspond to the geographic locations of the airflow reports (200).

2. The method (600, 800) of claim 1, wherein each of the airflow reports (200) includes a speed of the respective reporting aircraft, and generating the normalized turbulence values (704) comprises generating the normalized turbulence values (704) based on the speeds of the reporting aircraft.

3. The method (600, 800) of claim 1 or 2, wherein generating the normalized turbulence values (704) comprises comparing (i) the at least one of the speeds, the sizes, or the weights of the reporting aircraft to (ii) at least one baseline value.

4. The method (600, 800) of any of claims 1 to 3, wherein each of the normalized turbulence values (704) is generated by inputting the reported turbulence level and at least one of the size, the weight, or the identifying characteristic of the respective reporting aircraft from each of the airflow reports (200) into a normalization algorithm (702) that is configured to output the normalized turbulence values (704) so that all of the normalized turbulence values (704) are within a standard range.

5. The method (600, 800) of any of claims 1 to 4, wherein generating the normalized turbulence values (704) comprises scaling up a severity of a first reported turbulence level by a first reporting aircraft of the reporting aircraft in response to the at least one of the size or the weight of the first reporting aircraft being above at least one baseline value, and scaling down a severity of a second reported turbulence level by a second reporting aircraft of the reporting aircraft in response to the at least one of the size or the weight of the second reporting aircraft being below the at least one baseline value.

6. The method (600, 800) of any of claims 1 to 5, wherein the identifying characteristic of the respective reporting aircraft comprises at least one of a unique identifier of the reporting aircraft, a type of the reporting aircraft, the weight of the reporting aircraft, or the size of the reporting aircraft.

7. The method (600, 800) of any of claims 1 to 6, further comprising filtering the airflow reports (200) based on proximity of the geographic locations provided in the airflow reports (200) to the scheduled route (302) of the first aircraft, wherein generating the map (714) comprises plotting the graphic indicia (212, 304, 406) that correspond only to a subset of the airflow reports (200) having geographic locations within a threshold proximity of the scheduled route (302).

8. The method (600, 800) of any of claims 1 to 7, wherein the controller (102) is disposed onboard the first aircraft and obtaining the airflow reports (200) comprises the controller (102) receiving the airflow reports (200) from an automatic dependent surveillance broadcast (ADS-B) receiver mounted onboard the first aircraft, the ADS-B receiver (112) configured to wirelessly receive the airflow reports (200).

9. A turbulence notification system (100) comprising:
a controller (102) including one or more processors (104), the controller (102) configured to obtain airflow reports (200) that are generated by multiple reporting aircraft while the reporting aircraft are in flight, wherein each of the airflow reports (200) includes a geographic location of the respective reporting aircraft that generated the airflow report (200), a reported turbulence level experienced by the respective reporting aircraft due to atmospheric airflow, and an identifying characteristic of the respective reporting aircraft,
wherein the controller (102) is configured to generate normalized turbulence values (704) based on the reported turbulence levels in the airflow reports (200) and at least one of a size of the reporting aircraft or a weight of the reporting aircraft,
wherein the controller (102) is configured to determine effective turbulence levels (710) specific to a first aircraft based on the normalized turbulence values (704) and a first identifying characteristic of the first aircraft, wherein the effective turbulence levels (710) predict an effect of the atmospheric airflow on the first aircraft at the geographic locations of the airflow reports (200), and
the controller (102) is configured to generate a map (714) that plots a scheduled route (302) of the first aircraft and graphic indicia (212, 304, 406) representing the effective turbulence levels (710) that are determined, wherein the controller (102) is configured to plot the graphic indicia (212, 304, 406) at locations along vertical and horizontal (206, 208)axes of the map (714) that correspond to the geographic locations of the airflow reports (200).

10. The turbulence notification system (100) of claim 9, further comprising a normalization algorithm (702), wherein the controller (102) is configured to generate the normalized turbulence values (704) by inputting the reported turbulence level and at least one of the size, the weight, or the identifying characteristic of the reporting aircraft from each of the airflow reports (200) into a normalization algorithm (702) that is configured to output the normalized turbulence values (704) so that all of the normalized turbulence values (704) are within a standard range.

11. The turbulence notification system (100) of claim 9 or 10, wherein the controller (102) is configured to generate the normalized turbulence values (704) by comparing (i) the at least one of the sizes or the weights of the reporting aircraft to (ii) at least one baseline value.

12. The turbulence notification system (100) of any of claims 9 to 11, wherein the controller (102) is configured to generate the normalized turbulence values (704) by scaling up a severity of a first reported turbulence level by a first reporting aircraft of the reporting aircraft in response to the at least one of the size or the weight of the first reporting aircraft being above at least one baseline value, and scaling down a severity of a second reported turbulence level by a second reporting aircraft of the reporting aircraft in response to the at least one of the size or the weight of the second reporting aircraft being below the at least one baseline value.

13. The turbulence notification system (100) of any of claims 9 to 12, wherein each of the airflow reports (200) includes an altitude of the respective reporting aircraft and the vertical axis (206) of the map (714) represents altitude, wherein the controller (102) is configured to generate the map (714) to depict at least one flight path (210, 402, 404) of the first aircraft along the scheduled route, the controller (102) configured to position the graphic indicia (212, 304, 406) at locations along the vertical axis (206) that correspond to the altitudes in the airflow reports (200).

14. The turbulence notification system (100) of any of claims 9 to 13, wherein the controller (102) is configured to filter the airflow reports (200) based on proximity of the geographic locations provided in the airflow reports (200) to the scheduled route (302) of the first aircraft, wherein the controller (102) is configured to generate the map (714) comprises by only plotting the graphic indicia (212, 304, 406) that correspond to a subset of the airflow reports (200) having geographic locations within a threshold proximity of the scheduled route (302).

15. The turbulence notification system (100) of any of claims 9 to 14, wherein the controller (102) is disposed onboard the first aircraft and the controller (102) is configured to obtain the airflow reports (200) by receiving the airflow reports (200) from an automatic dependent surveillance broadcast (ADS-B) receiver (112) mounted onboard the first aircraft, the ADS-B receiver (112) configured to wirelessly receive the airflow reports (200).
